# EUROPEAN PATENT APPLICATION

(11) **EP 3 834 904 A1**
(43) Date of publication of application: **16.06.2021**
(21) Application number: 20748347.0
(22) Date of filing: 23.01.2020
(51) Int. Cl.: B01D 33/04, B01D 29/17, B01D 29/25, B01D 29/37, C02F 11/12, C02F 11/14

(54) **ORGANIC SLUDGE TREATMENT FACILITY AND TREATMENT METHOD**

(30) Priority: 29.01.2019 JP 2019013444
(71) Applicant: Tsukishima Kikai Co., Ltd., Tokyo 104-0053 (JP)
(72) Inventor: YAMATO, Tsuneo, Tokyo 104-0053 (JP)
(74) Representative: Müller-Boré & Partner Patentanwälte PartG mbB
(86) International application number: PCT/JP2020/002212
(87) International publication number: WO 2020/158552

(57) **Abstract**

An organic sludge treatment facility and a treatment method of the present invention are an organic sludge treatment facility and a treatment method including thickening means (2) for thickening organic sludge (C) coagulated by adding a coagulant B, in which thickening hot water (F) having a temperature in a range of higher than 50°C and lower than 100°C is supplied from thickening hot water supply means to the thickening means (2) and mixed with the organic sludge (C).

## Description

### [Technical Field]

The present invention relates to an organic sludge treatment facility including thickening means for thickening organic sludge which is coagulated by adding a coagulant to sewage sludge or the like generated from, for example, a sewage treatment plant, and an organic sludge treatment method in which such organic sludge is thickened by thickening means.

Priority is claimed on Japanese Patent Application No. 2019-013444, filed on January 29, 2019, the content of which is incorporated herein by reference.

### [Background Art]

For example, Patent Document 1 describes an organic sludge treatment facility including thickening means for thickening treatment sludge, which is connected to a treatment sludge supply path to supply the treatment sludge, dewatering means for dewatering the thickened sludge thickened by the thickening means, a thickened sludge supply path connecting the thickening means and the dewatering means, and a dewatered wastewater tank which holds dewatered wastewater dewatered from the thickened sludge by the dewatering means. The dewatered wastewater tank is capable of being provided with an electrolyte and is connected to a dewatered wastewater circulation supply path through which the dewatered wastewater held inside the dewatered wastewater tank is supplied to the thickened sludge supply path and circulated to the dewatering means.

Then, this Patent Document 1 describes that washing water supply means is connected to the thickening means, washing water is supplied from the washing water supply means to the treatment sludge being thickened by the thickening means, a supply amount of the washing water supplied from the washing water supply means to the thickening means is equal to or lower than a supply amount of the treatment sludge supplied to the thickening means in terms of volume, and as the washing water, hot water of about 50°C is desirably used.

### [Citation List]

### [Patent Document]

[Patent Document 1] Japanese Unexamined Patent Application, First Publication No. 2017-170346

### [Summary of Invention]

### [Technical Problem]

As described above, it is desirable to use hot water as the washing water because the organic sludge to which the coagulant is added is heated by the hot water in the thickening means, protein in the organic sludge is thermally denatured, and retained moisture is separated to be discharged as wastewater together with the washing water. Therefore, the dewatering efficiency in the dewatering means can be further improved.

However, in the treatment facility and the treatment method described in Patent Document 1, a desirable temperature of the washing water is about 50°C, and even if such washing water is supplied to the organic sludge at 25°C in an equal amount which is the maximum amount of washing water supplied with respect to a sludge supply amount as described above, the organic sludge can be heated only to about 38°C. Therefore, there is a possibility that the dewatering efficiency in the dewatering means cannot be reliably improved.

The present invention is made under such a background, and an object of the invention is to provide an organic sludge treatment facility and a treatment method capable of achieving a sufficiently low moisture content of organic sludge by heating of organic sludge in thickening means.

### [Solution to Problem]

An organic sludge treatment facility of the present invention includes thickening means for thickening organic sludge that is coagulated by adding a coagulant. Thickening hot water having a temperature in a range of higher than 50°C and lower than 100°C is supplied from thickening hot water supply means and mixed with the organic sludge in the thickening means.

Further, an organic sludge treatment method of the present invention for thickening organic sludge, which is coagulated by adding a coagulant, by thickening means, includes: supplying thickening hot water having a temperature higher than 50°C and lower than 100°C from thickening hot water supply means to the thickening means to be mixed with the organic sludge.

In the organic sludge treatment facility and treatment method configured as described above, thickening hot water having a temperature higher than 50°C and lower than 100°C is supplied from the thickening hot water supply means to the thickening means for thickening the organic sludge to be mixed with the organic sludge. Therefore, the protein in the organic sludge can be reliably thermally denatured to separate and discharge retained moisture. Therefore, the organic sludge can be thickened to a sufficiently high thickening in the thickening means, and the dewatering efficiency can be improved in a case where the dewatering means is provided in the subsequent stage.

Here, as a result of various studies by the inventor of the present invention, especially if the organic sludge is mixed raw sludge, as described later, it is found that the moisture content of the organic sludge can be reduced by about 1 % every time the sludge temperature is raised by 10°C. Therefore, the higher the sludge temperature, that is, the higher the temperature of the thickening hot water, the more the moisture content of the thickened organic sludge can be reduced. Further, by heating the organic sludge, since the viscosity of the organic sludge is lowered, in a case where the thickened organic sludge is dewatered, the dewatering efficiency is also improved.

Further, as described above, by mixing the thickening hot water with the organic sludge in the thickening means, an coagulation inhibitor contained in a liquid of the organic sludge can be replaced with the thickening hot water. Therefore, the coagulant such as poly-ferric sulfate (PFS) added to the thickened organic sludge can be prevented from being consumed by the coagulation inhibitor, the coagulant can be efficiently reacted with a solid content of the thickened organic sludge, and an amount of the coagulant added can also be reduced.

When the temperature of the thickening hot water is 50°C or lower, the effects of lowering the viscosity of the above-mentioned organic sludge and separating moisture cannot be sufficiently obtained. Further, when the temperature of the thickening hot water exceeds 100°C, it becomes difficult to handle. As described above, the higher the temperature of the thickening hot water, the more the viscosity of the organic sludge decreases and the separation of the moisture due to the thermal denaturation of the protein is promoted. For example, in a case where hot water used in the treatment facility is used as the thickening hot water, a temperature in a range of 60°C or higher and 90°C or lower is realistic and desirable.

Further, as described above, in order to further improve the dewatering efficiency in a case where the thickened organic sludge is dewatered, it is desirable to thicken the organic sludge to a sludge concentration of 5 wt% or higher by the thickening means and, for example, it is more desirable to thicken the organic sludge to a sludge concentration in a range of 8 wt% to 10 wt%. Further, in a case where the similarly thickened organic sludge is dewatered, it is desirable to add the coagulant to the organic sludge thickened by the above-mentioned thickening means.

Here, as the thickening means, first, the thickening means may be a vertical type filtration thickening device including: a thickening tank having a central axis which extends in a vertical direction and a body which is a thickening filtration screen, the organic sludge being supplied into the thickening tank, and an outer circumference of the thickening filtration screen being a liquid filtration chamber; and transporting means in which a screw is attached to a rotation shaft extending along the central axis of the thickening tank, in which the rotation shaft and the screw are rotated by rotation drive means to transport the organic sludge.

In a case where such a vertical type filtration thickening device is used, the rotation shaft of the transporting means may have a hollow cylindrical shape, a plurality of through-holes may be formed in a cylindrical wall portion of the rotation shaft, and the thickening hot water is supplied to a hollow portion in the rotation shaft and ejected from the through-holes such that the thickening hot water is supplied to the organic sludge to be mixed therewith.

Further, as the thickening means, second, the thickening means may be a screw type thickening device including: a casing having a central axis which extends in a lateral direction and a body which is a thickening filtration screen, the organic sludge being supplied into the casing, and an outer circumference of the thickening filtration screen being a liquid filtration chamber; and transporting means in which a screw is attached to a rotation shaft extending along the central axis of the casing, in which the rotation shaft and the screw are rotated by rotation drive means to transport the organic sludge.

In a case where such a screw type thickening device is used as the thickening means, the thickening hot water may be supplied from the thickening hot water supply means and mixed with the organic sludge by the rotation of the screw by the rotation drive means.

Further, as the thickening means, third, a belt type thickening device may be used, which includes an endless thickening filtration cloth that is wound around a plurality of rolls to be traveled, and filters and thickens the organic sludge supplied to a sludge supply unit on a side opposite to a traveling direction of the thickening filtration cloth in a thickening filtration unit in which the thickening filtration cloth travels in the horizontal direction by the thickening filtration cloth.

In a case where such a belt type thickening device is used, the thickening hot water may be supplied from the thickening hot water supply means to a traveling direction side of the thickening filtration cloth with respect to the sludge supply unit in the thickening filtration unit, and mixed with the organic sludge on the thickening filtration cloth traveling in a horizontal sludge filtration unit. In addition to these vertical type filtration thickening device, belt type thickening device, and screw type thickening device, for example, a thickening device such as a drum type thickening device or a honeycomb type thickening device may be used as long as it is a thickening device that does not destroy the organic sludge other than a centrifugal thickening device that destroys the coagulated organic sludge.

### [Advantageous Effects of Invention]

As described above, according to the present invention, the organic sludge is heated by supplying the thickening hot water to the organic sludge and being mixed with the organic sludge in the thickening means, such that the protein in the organic sludge is reliably thermally denatured and thereby moisture can be separated. Therefore, the organic sludge can be thickened to a high concentration with a sufficiently low moisture content.

### [Brief Description of the Drawings]

Fig. 1 is a schematic diagram showing a first embodiment of an organic sludge treatment facility of the present invention.
Fig. 2 is a detailed view of the embodiment shown in Fig.1.
Fig. 3 is a diagram of a first example showing a relationship between a temperature of thickening hot water and a moisture content of organic sludge (thickened sludge) according to the embodiment shown in Figs. 1 and 2.
Fig. 4 is a diagram showing a relationship between the temperature and the moisture content of the organic sludge (thickened sludge) heated by the thickening hot water of the first example shown in Fig. 3.
Fig. 5 is a diagram of a second example showing a relationship between a temperature of thickening hot water and a moisture content of organic sludge (thickened sludge) according to the embodiment shown in Figs. 1 and 2.
Fig. 6 is a diagram showing a relationship between the temperature and the moisture content of the organic sludge (thickened sludge) heated by the thickening hot water of the second example shown in Fig. 5.
Fig. 7 is a diagram of a third example showing a relationship between a temperature of thickening hot water and a moisture content of organic sludge (thickened sludge) according to the embodiment shown in Figs. 1 and 2.
Fig. 8 is a diagram showing a relationship between the temperature and the moisture content of the organic sludge (thickened sludge) heated by the thickening hot water of the third example shown in Fig. 7.
Fig. 9 is a diagram showing a first modified example of the thickening means and the dewatering means of the first embodiment shown in Figs. 1 and 2.
Fig. 10 is a diagram showing a second modified example of the thickening means and the dewatering means of the first embodiment shown in Figs. 1 and 2.
Fig. 11 is a schematic diagram showing a second embodiment of the organic sludge treatment facility of the present invention.

### [Description of Embodiments]

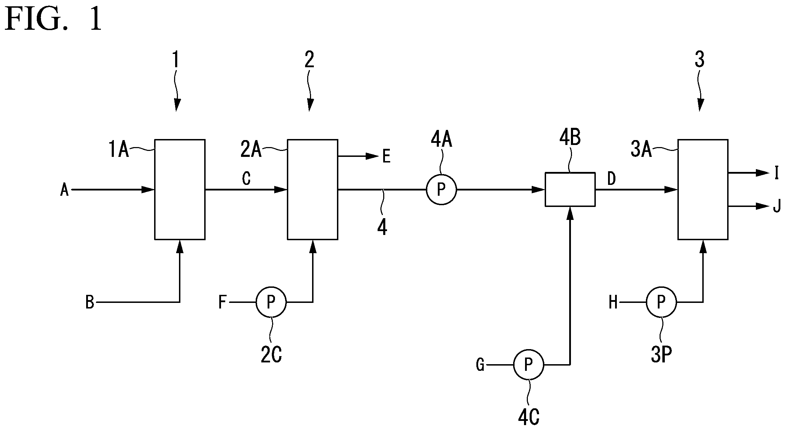

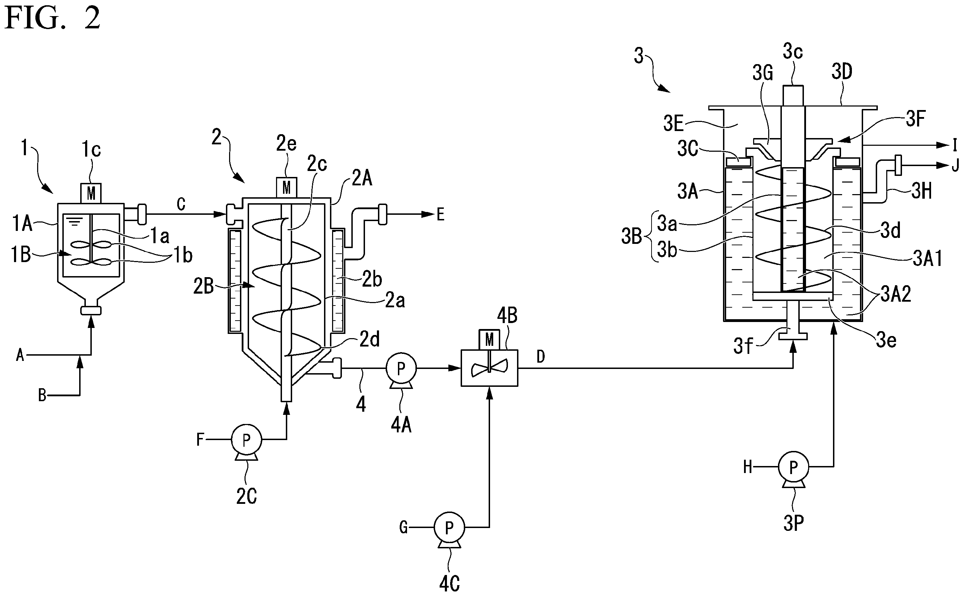

Figs. 1 and 2 show a first embodiment of an organic sludge treatment facility of the present invention, and an organic sludge treatment method of the present invention is also described while describing below the first embodiment of the organic sludge treatment facility. The organic sludge treatment facility of the present embodiment includes coagulation means 1 for coagulating organic sludge A such as sewage sludge of mixed raw sludge generated and supplied, for example, from a sewage treatment plant by adding a polymer coagulant B to the organic sludge A, thickening means 2 for thickening coagulated sludge C of which a solid content is coagulated to some extent by the coagulation means 1, dewatering means 3 for dewatering thickened sludge D thickened by the thickening means 2, and a thickened sludge supply path 4 which connects the thickening means 2 and the dewatering means 3.

As shown in Fig. 2, the coagulation means 1 includes a bottomed cylindrical coagulation tank 1A having a central axis extending in a vertical direction, in which the organic sludge A and the polymer coagulant B are supplied from the bottom to be held. The coagulation tank 1A is provided with stirring means 1B in which a stirring blade 1b is attached to a rotation shaft 1a extending along the central axis of the coagulation tank 1A, and which stirs and mixes the organic sludge A and the polymer coagulant B by rotating the rotation shaft 1a and the stirring blade 1b by rotation drive means 1c such as a motor provided on an upper portion of the coagulation tank 1A. The coagulated sludge C, which is stirred and mixed with the polymer coagulant B by the stirring means 1B to be coagulated, is extracted from the upper portion of the coagulation tank 1A and supplied to the thickening means 2.

In the present embodiment, the thickening means 2 is a vertical type filtration thickening device, and includes a bottomed cylindrical thickening tank 2A having a central axis extending in the vertical direction similar to the coagulation tank 1A, in which the coagulated sludge C supplied from the coagulation means 1 is held. The coagulated sludge C is supplied from the upper portion of the thickening tank 2A into the thickening tank 2A. However, the body of the thickening tank 2A is a thickening filtration screen 2a formed of wedge wire, punching metal, or the like, and an outer circumfenrence of the thickening filtration screen 2a is a liquid filtration chamber 2b.

Further, in the thickening tank 2A, a screw 2d is attached to a rotation shaft 2c extending along the central axis of the thickening tank 2A, and transporting means 2B is provided for transporting the coagulated sludge C by rotating the rotation shaft 2c and the screw 2d by rotation drive means 2e such as a motor provided on the upper portion of the thickening tank 2A. The coagulated sludge C supplied from the upper portion of the thickening tank 2A is transported downward by the transporting means 2B, and moisture is separated and thickened by the thickening filtration screen 2a, and the coagulated sludge C is thickened at a sludge concentration of 5 wt% or higher, preferably to a sludge concentration in a range of 8 wt% to 10 wt%, extracted from the bottom of the thickening tank 2A, and supplied to the thickened sludge supply path 4 as thickened sludge D.

The bottoms of the thickening tank 2A and the coagulation tank 1A are each formed in a truncated cone shape of which a diameter decreases downward. Further, the moisture separated from the coagulated sludge C by the thickening filtration screen 2a is accommodated in the liquid filtration chamber 2b and treated as wastewater E.

Then, from thickening hot water supply means (not shown), thickening hot water F having a temperature in a range of higher than 50°C and lower than 100°C, preferably a temperature in a range of 60°C or higher and 90°C or lower is supplied by a pump 2C, and is mixed with the coagulated sludge C supplied from the coagulation means 1 in the thickening means 2.

Here, the rotation shaft 2c of the transporting means 2B of the thickening means 2 has a hollow cylindrical shape, and a large (plurality) number of through-holes are formed in the cylindrical wall portion of the rotation shaft 2c. Then, the thickening hot water F is supplied from a lower end of the rotation shaft 2c to the hollow portion in the rotation shaft 2c, ejected from the through-holes and is supplied to the coagulated sludge C, which is supplied from the coagulation means 1 into the thickening tank 2A and held therein, to be mixed. Therefore, in the present embodiment, the coagulated sludge C is heated in the thickening means 2, the protein is thermally denatured, the retained moisture is separated and discharged as the wastewater E together with the thickening hot water F, and the thickened sludge D is thickened to the concentration as described above.

As the thickening hot water F and dewatering hot water H described later, smoke effluent treatment tower wastewater of a sludge incineration facility installed in the organic sludge treatment facility, scrubber wastewater of a sludge drying facility, or hot water generated from a digestion gas generator can be used. Further, it is also possible to heat clean water, sand filtered water, or the like with a boiler to be used.

The thickened sludge supply path 4 to which the thickened sludge D thus thickened is supplied is provided with a pump 4A that sends the thickened sludge D to the dewatering means 3, and mixing means 4B such as a high-speed mixer is provided between the pump 4A and the dewatering means 3. An inorganic coagulant such as poly-ferric sulfate (PFS) or a coagulant G such as the polymer coagulant is supplied by the pump 4C to the mixing means 4B, and added to the thickened sludge D to be mixed.

In the present embodiment, in the dewatering means 3 to which the thickened sludge D, where the coagulant G is added and mixed, is supplied, a filtration screen 3B for filtering the thickened sludge D is disposed in a casing 3A, and the thickened sludge D is supplied to a first space 3A1 among a plurality of spaces in the casing 3A separated by the filtration screen 3B.

Here, in the present embodiment, the dewatering means 3 is a vertical type screw press and includes an inner filtration screen 3a as the second filtration screen 3B, which is disposed in the casing 3A and has a cylindrical or conical shape centered on an axis extending in the vertical direction coaxial with the casing 3A, an outer filtration screen 3b having a cylindrical or conical shape coaxial with the inner filtration screen 3a and disposed in the casing 3A on the outside of the inner filtration screen 3a with a gap, and a ribbon screw 3d which is accommodated between the inner filtration screen 3a and the outer filtration screen 3b in a spiral shape twisting around the axis, and is rotated relative to the inner filtration screen 3a and the outer filtration screen 3b centered on the axis by rotation drive means 3c such as a motor.

In the present embodiment, a space between the inner filtration screen 3a and the outer filtration screen 3b is set as the first space 3A1 to be supplied with the thickened sludge D, and a space inside the inner filtration screen 3a and a space inside the casing 3A and outside the outer filtration screen 3b are set as a second space 3A2. Then, in the present embodiment, dewatering hot water H having a temperature in a range of 50°C or higher and lower than 100°C, preferably a temperature in a range of 60°C or higher and 90°C or lower is also supplied by a pump 3P from dewatering hot water supply means (not shown) to the second space 3A2. The inner filtration screen 3a and the outer filtration screen 3b are also formed of wedge wire, punching metal, or the like.

The casing 3A has a bottomed cylindrical shape centered on the axis, and the thickened sludge D is supplied from the bottom of the casing 3A to the first space 3A1 via a supply pipe 3f connected to an annular plate-shaped connecting plate 3e that connects the bottoms of the inner filtration screen 3a and the outer filtration screen 3b. The moisture is separated by the inner filtration screen 3a and the outer filtration screen 3b while the thickened sludge D is transported upward by the relative rotation of the ribbon screw 3d.

Further, an annular plate-shaped board 3C is disposed on the upper portion in the casing 3A, and the outer filtration screen 3b is attached to an inner circumferential portion of the board 3C to be fixed. Further, a lid 3D is disposed in an upper opening of the casing 3A above the board 3C, the inner filtration screen 3a is attached to the lid 3D to be fixed, and the rotation drive means 3c is disposed on the lid 3D and rotates the ribbon screw 3d via a cylindrical screw support that covers the upper portion of the inner filtration screen 3a.

In the present embodiment, as described above, the inner filtration screen 3a and the outer filtration screen 3b are fixed to the casing, and the ribbon screw 3d is rotated by the rotation drive means 3c, but conversely, the ribbon screw 3d is fixed, and the inner filtration screen 3a and the outer filtration screen 3b may be rotated, or both of the ribbon screw 3d and the combination of the inner filtration screen 3a and the outer filtration screen 3b may be rotated in opposite directions to each other.

Furthermore, an upper space in the casing 3A between the board 3C and the lid 3D is a discharge chamber 3E, and an annular upper opening of the first space 3A1 in the discharge chamber 3E is a discharge port 3F. The discharge port 3F is provided with a squeezing ring 3G having a truncated cone-shaped outer circumferential surface centered on the axis, which goes upward toward an outer circumferential side. Dewatered sludge I dewatered from the thickened sludge D, in which moisture is separated while the thickened sludge D is transported upward in the first space 3A1 by the ribbon screw 3d, flows out from the discharge port 3F to the discharge chamber 3E while being squeezed by the squeezing ring 3G to be discharged.

Further, in the present embodiment, dewatering hot water H is also supplied from the bottom of the casing 3A to the second space 3A2 in the casing 3A. As described above, the dewatering hot water H supplied to the second space 3A2 heats the thickened sludge D in the first space 3A1 in the same manner as the thickening means 2. Therefore, the protein of the thickened sludge D is thermally denatured, and thereby the retained moisture is separated and filtered by the inner filtration screen 3a and the outer filtration screen 3b. The moisture is discharged as wastewater J from a wastewater pipe 3H raised from the second space 3A2 together with the dewatering hot water H that is cooled by heating the thickened sludge D.

In the organic sludge treatment facility and treatment method having such a configuration, the thickening means 2 thickening the coagulated sludge C, which is coagulated by adding the polymer coagulant B to the organic sludge A in the coagulation means 1, is provided in a preceding stage of the dewatering means 3. The thickened sludge D thickened by the thickening means 2 is dewatered by the dewatering means 3.

Then, the thickening hot water supply means supplies the thickening hot water F having a temperature in a range of higher than 50°C and lower than 100°C to the thickening means 2 to mix the thickening hot water F with the coagulated sludge C. Therefore, in the thickening means 2 in the preceding stage of the dewatering means 3, the protein can be thermally denatured by heating the thickened sludge D, and the moisture retained in the thickened sludge D can be separated to improve the dewatering efficiency in the dewatering means 3 in the subsequent stage.

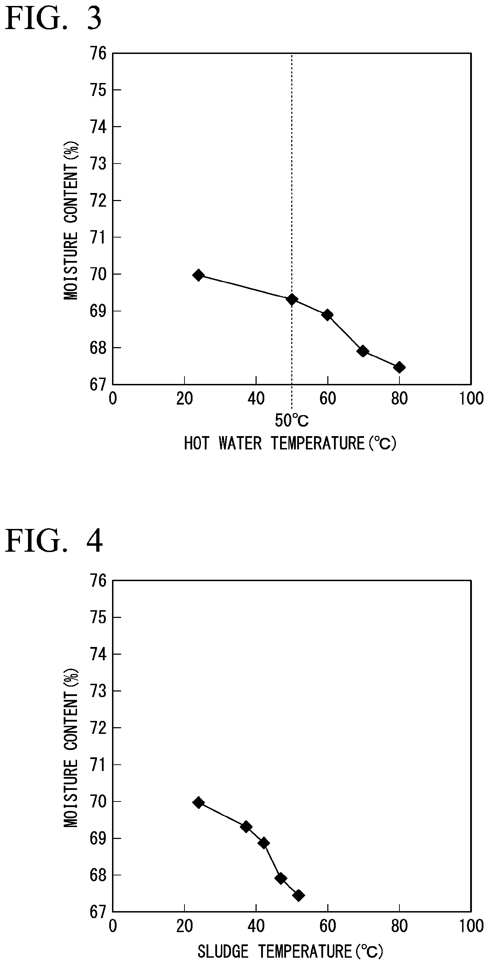

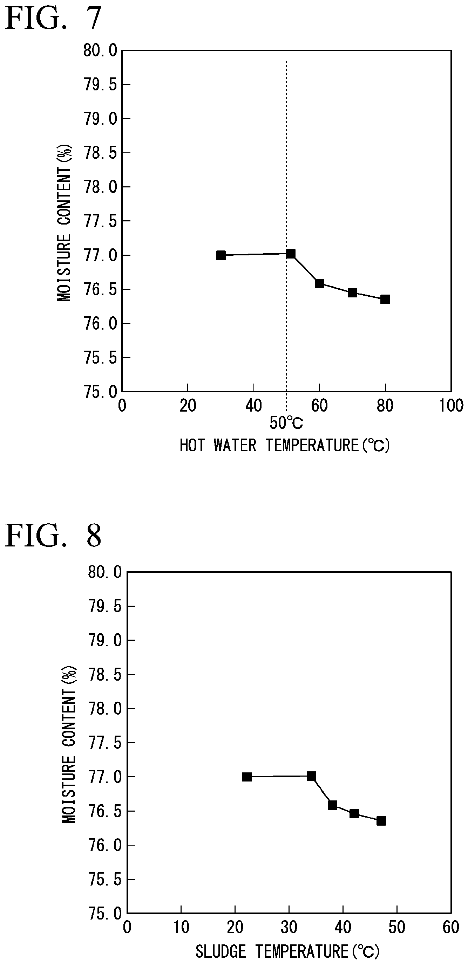

Here, according to the first embodiment, Figs. 3, 5, and 7 are diagrams of first to third examples each showing a relationship between the temperature of the thickening hot water F and the moisture content of the thickened sludge D when the coagulated sludge C, which is coagulated by each supplying three types of organic sludge A having a sludge concentration of 2 wt% to the coagulation means 1 at 10 m³/h, is thickened while being heated by the thickening hot water F at 3.3 m³/h in the thickening means 2. Figs. 4, 6, and 8 are diagrams each showing a relationship between the temperature and the moisture content of the thickened sludge D heated by the thickening hot water F in the first to third examples.

The organic sludge A of the first example is mixed raw sludge, the organic sludge A of the second example is mixed raw sludge of excess rich, and the organic sludge A of the third example is digested sludge. Further, in the first to third examples, the thickening hot water F is obtained by heating the clean water in a boiler. In the first example, 11 wt% of poly-ferric sulfate (PFS) is added, and in the second example, 5 wt% of poly-ferric sulfate (PFS) is added.

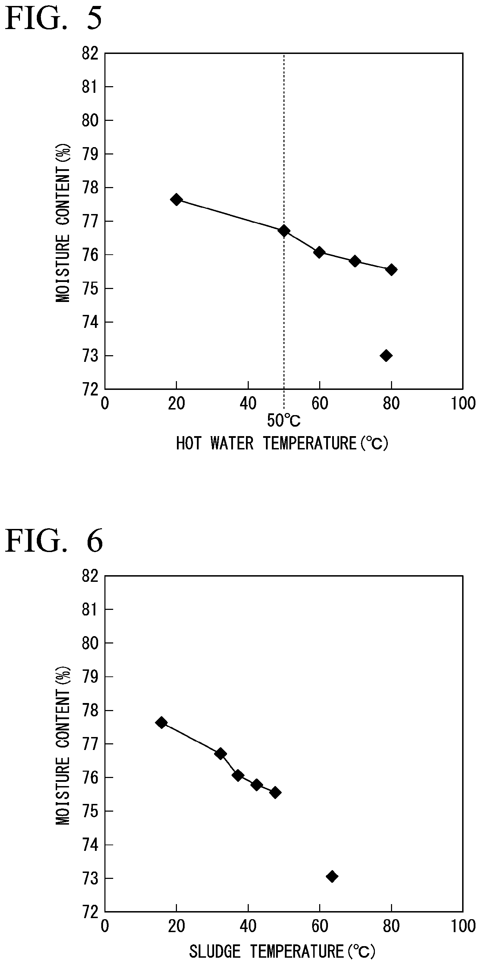

From Figs. 3 to 8, it can be seen that, at a location where the temperature of the thickening hot water F supplied to the thickening means 2 and mixed with the coagulated sludge C exceeds 50°C, a decreasing rate of the moisture content of the thickened sludge D to an increasing rate of the temperature of the thickening hot water F begins to increase. The moisture content tends to decrease as the temperature of the thickening hot water F increases. Therefore, according to the organic sludge treatment facility and the treatment method having the configuration, as described above, the moisture content of the thickened sludge D can be reduced, and the dewatering efficiency in the dewatering means 3 in the subsequent stage of the thickening means 2 can be improved. The reason why two points are plotted at the hot water temperature of 80°C in Fig. 5 is that the thickening hot water F at 80°C was supplied twice.

Further, as described above, by mixing the thickening hot water F with the coagulated sludge C in the thickening means 2, an coagulation inhibitor contained in the liquid of the coagulated sludge C can be replaced with the thickening hot water F. Therefore, the coagulant G such as poly-ferric sulfate added to the thickened sludge D can be prevented from being consumed by the coagulation inhibitor in the thickened sludge supply path 4, and the coagulant G can be efficiently reacted with a solid content of the thickened sludge D.

Further, by heating the coagulated sludge C with the thickening hot water F, the reactivity between the coagulant G and the thickened sludge D can also be improved, and an adding amount of the coagulant G can be reduced. Further, as described above, by heating the thickened sludge D, because the viscosity of the thickened sludge D decreases, the dewatering efficiency can be further improved in a case where the thickened sludge D is dewatered by the dewatering means 3.

If the temperature of the thickening hot water F is 50°C or lower, as shown in Figs. 3 to 8, the moisture content of the thickened sludge D cannot effectively decrease. Further, if the temperature of the thickening hot water F is 100°C or higher, the handleability of the thickening hot water F is impaired. Further, the higher the temperature of the thickening hot water F, the more moisture separation and the decrease in viscosity due to the thermal denaturation of the protein of the thickened sludge D can be promoted. However, as described above, in a case where the hot water used in the organic sludge treatment facility is used as the dewatering hot water H, a temperature in a range of 60°C or higher and 90°C or lower is realistic.

Furthermore, as described above, in order to further improve the dewatering efficiency in the dewatering means 3 in the subsequent stage of the thickening means 2, it is desirable to thicken the thickened sludge D thickened by the thickening means 2 to the sludge concentration of 5 wt% or higher, and it is more desirable to thicken the thickened sludge D to the sludge concentration in a range of 8 wt% to 10 wt%.

Further, in the organic sludge treatment facility and the treatment method of the present embodiment, even in the dewatering means 3, among a plurality of spaces disposed in the casing 3A and separated by the filtration screen 3B for filtering the thickened sludge D, the thickened sludge D is supplied to the first space 3A1, and the dewatering hot water H having a temperature in a range of higher than 50°C and a lower than 100°C is supplied from the dewatering hot water supply means to the second space 3A2. Then, as described above, the thickened sludge D supplied to the first space 3A1 is also heated by the dewatering hot water H supplied to the second space 3A2, such that the viscosity of the thickened sludge D decreases and the moisture retained in the thickened sludge D is separated by thermal denaturation of the protein.

As described above, the moisture separated from the thickened sludge D is filtered through the filtration screen 3B, flows into the second space 3A2 and is discharged together with the cooled dewatering hot water H. Therefore, the moisture content of the dewatered sludge 1 discharged from the discharge port 3F to the discharge chamber 3E can be further reduced. Further, as described above, since the filtration resistance is reduced by lowering the viscosity of the thickened sludge D, the discharge of the moisture separated from the thickened sludge D into the second space 3A2 can be facilitated. Therefore, according to the present embodiment, the moisture content of the dewatered sludge I can be reduced and the moisture separated from the thickened sludge D can be efficiently discharged.

Here, if the temperature of the dewatering hot water H is 50°C or lower, as described above, the effects of lowering the viscosity of the thickened sludge D and separating moisture cannot be sufficiently obtained. Further, if the temperature of the dewatering hot water H exceeds 100°C, it is difficult to handle in the same manner as the thickening hot water F. The higher the temperature of the dewatering hot water H, the lower the viscosity of the thickened sludge D and the promotion of moisture separation due to the thermal denaturation of the protein can be achieved. However, as described above, in a case where the hot water used in the organic sludge treatment facility is used as the dewatering hot water H, similar to the thickening hot water F, the temperature in a range of 60°C or higher and 90°C or lower is realistic.

Further, in the treatment facility of the present embodiment, as the dewatering means 3, the vertical type screw press is used, including the inner filtration screen 3a which is disposed in the casing 3A in a cylindrical or conical shape centered on the axis extending in the vertical direction, the outer filtration screen 3b which is disposed in the casing 3A on the outside of the inner filtration screen 3a with a gap and having a cylindrical or conical shape coaxial with the inner filtration screen 3a, and the ribbon screw 3d which is accommodated between the inner filtration screen 3a and the outer filtration screen 3b in a spiral shape twisting around the axis and is rotated relative to the inner filtration screen 3a and the outer filtration screen 3b centered on the axis.

A space between the inner filtration screen 3a and the outer filtration screen 3b as the filtration screen 3B is the first space 3A1 to which the thickened sludge D is supplied, and a space inside the inner filtration screen 3a and a space outside the outer filtration screen 3b are the second space 3A2 to which the dewatering hot water H is supplied.

In the vertical type screw press having such a configuration, while the thickened sludge D supplied to the first space 3A1 between the inner filtration screen 3a and the outer filtration screen 3b is transported in the axial direction by the relative rotation of the ribbon screw 3d, the thickened sludge D is dewatered by the inner filtration screen 3a and the outer filtration screen 3b. Therefore, a large filtration area can be ensured and more efficient filtration can be achieved. Further, since the thickened sludge D supplied to the first space 3A1 can be heated by the dewatering hot water H supplied to the inside of the first space 3A1 and the second space 3A2 outside thereof, the separation of moisture by the thermal denaturation of the protein can be promoted more efficiently. Preferably 80% or higher, and more preferably the entire surface of the filtration surfaces of the inner filtration screen 3a and the outer filtration screen 3b, is always in direct contact with the dewatering hot water H. Therefore, in the dewatering process of the thickened sludge D, heating of the thickened sludge D supplied to the first space 3A1 via the filtration screen can be sufficiently performed, and the separation of moisture by thermal denaturation of the protein can be promoted more efficiently. Further, since the filtration surface is always in direct contact with the dewatering hot water H, the filtration surface does not come into contact with the atmosphere. Therefore, clogging due to drying of the filtration surface can be prevented.

However, in the present embodiment, the vertical type screw press including two filtration screens 3B, that is, the inner filtration screen 3a and the outer filtration screen 3b is used as the dewatering means 3, but it is also possible to use a vertical type screw press in which a screw in a spiral shape twisted around the axis, which is rotated centered on the axis, is disposed in one cylindrical or conical filtration screen centered on the axis extending in the vertical direction, a lateral type screw press, or belt press which are described below. In addition to these, a rotary press or a multi-plate type screw press can also be used.

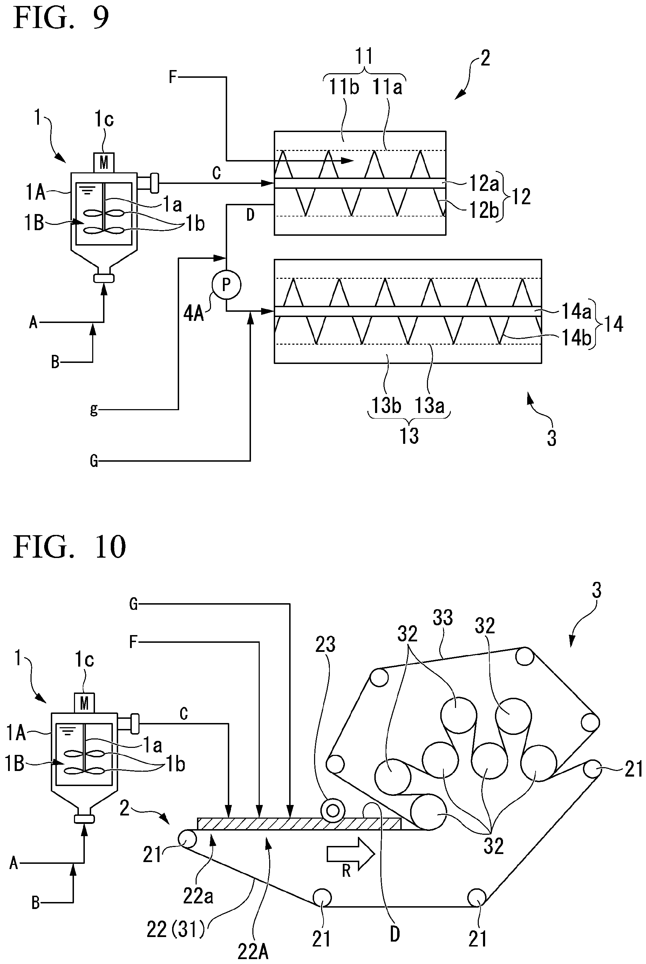

Next, Fig. 9 shows a first modified example of the thickening means 2 and the dewatering means 3 of the first embodiment shown in Figs. 1 and 2, and the same reference numerals are given to the portions common to those in the first embodiment shown in Figs. 1 and 2. In the first modified example, the thickening means 2 is a screw type thickening device.

That is, the thickening means 2 in the first modified example includes a cylindrical casing 11 having a body which is a thickening filtration screen 11a, an inside to which the coagulated sludge C is supplied, and a central axis which extends in a lateral direction, in which an outer circumference of the thickening filtration screen 11a is a liquid filtration chamber 11b; and transporting means 12 in which a screw 12b is attached to a rotation shaft 12a extending along the central axis of the casing 11, and the rotation shaft 12a and the screw 12b are rotated by rotation drive means (not shown) to transport the coagulated sludge C.

Then, on a transport direction side of the coagulated sludge C by the transporting means 12, as in the first embodiment, the thickening hot water F is supplied from the thickening hot water supply means (not shown) and is mixed with the coagulated sludge C by the rotation of the screw 12b. In the thickening means 2 in such a first modified example, the coagulated sludge C is filtered by the thickening filtration screen 11a while being transported by the rotation of the screw 12b of the transporting means 12 and is thickened to, for example, the sludge concentration of about 6 wt%. The thickened sludge D thus thickened is extracted by a pump 4A and supplied to the dewatering means 3, but since a flock of the thickened sludge D is easily broken by heating, a small amount of a polymer coagulant g may be added in addition to the inorganic coagulant G.

Further, in the first modified example, the dewatering means 3 also uses the lateral type screw press. That is, the dewatering means 3 in the first modified example also includes a cylindrical casing 13 having a body which is a dewatering filtration screen 13a, an inside to which the thickened sludge D is supplied, and a central axis which extends in a lateral direction, in which an outer circumference of the dewatering filtration screen13a is a liquid filtration chamber 13b; and transporting means 14 in which a screw 14b is attached to a rotation shaft 14a extending along the central axis of the casing 13, and the rotation shaft 14a and the screw 14b are rotated by rotation drive means (not shown) to transport the thickened sludge D.

Here, the screw 14b in the transporting means 14 of the dewatering means 3 is designed such that a pitch becomes smaller in the transporting direction of the thickened sludge D and the thickened sludge D is compressed while the thickened sludge D is transported by the screw 14b to dewater the thickened sludge D. Also in the first modified example, the dewatering hot water H may be supplied and mixed in the dewatering means 3.

Next, Fig. 10 shows a second modified example of the thickening means 2 and the dewatering means 3 of the first embodiment shown in Figs. 1 and 2. The same reference numerals are also given to the portions common to those in the first embodiment shown in Figs. 1 and 2. In the first modified example, the thickening means 2 is a belt type thickening device.

That is, the thickening means 2 in the second modified example includes an endless thickening filtration cloth 22 wound around a plurality of rolls 21 so as to travel. By the gravity, the thickening filtration cloth 22 filters and thickens coagulated sludge C supplied to a sludge supply unit 22a on a side opposite to a traveling direction R of the thickening filtration cloth 22 in a thickening filtration unit 22A where the thickening filtration cloth 22 travels in the horizontal direction.

Then, in the second modified example, on the traveling direction R side of the thickening filtration cloth 22 from the sludge supply unit 22a in the thickening filtration unit 22A, thickening hot water F is supplied from thickening hot water supply means (also not shown) to be mixed with coagulated sludge C which is thickened to, for example, the sludge concentration of about 6 wt%. In addition, on the traveling direction R side of the thickening filtration cloth 22 more than the position where the thickening hot water F is supplied, inorganic coagulant G may be supplied to the thickened sludge D. Further, a screw 23 for reacting the inorganic coagulant G with the thickened sludge D may be provided.

Further, in the second modified example, the dewatering means 3 is also the belt press. That is, in the dewatering means 3, a dewatering filtration cloth 31 is wound around a plurality of rolls 32 so as to travel. A squeeze filtration cloth 33 is wound around the plurality of rolls 32 so as to travel, thereby sandwiching the thickened sludge D with the dewatering filtration cloth 31. The thickened sludge D is squeezed and dewatered between the dewatering filtration cloth 31 and the squeeze filtration cloth 33.

In the second modified example, the dewatering filtration cloth 31 of the dewatering means 3 is endless-like continuous with the thickening filtration cloth 22 of the thickening means 2, and the dewatering filtration cloth 31 dewatering the thickened sludge D is returned to the thickening means 2 as the thickening filtration cloth 22. Further, also in the second modified example, the dewatering hot water H may be supplied to the thickened sludge D supplied in the dewatering means 3 to be mixed.

Further, in addition to the screw type thickening device and the belt type thickening device as in the first and second modified examples, a drum type thickening device or a honeycomb type thickening device can be used as long as it is a thickening device that does not destroy the coagulated sludge C other than a centrifugal thickening device that destroys the coagulated sludge C. Furthermore, the thickening means 2 and the dewatering means 3 of the first embodiment, the first and second modified examples may be used in an appropriate combination.

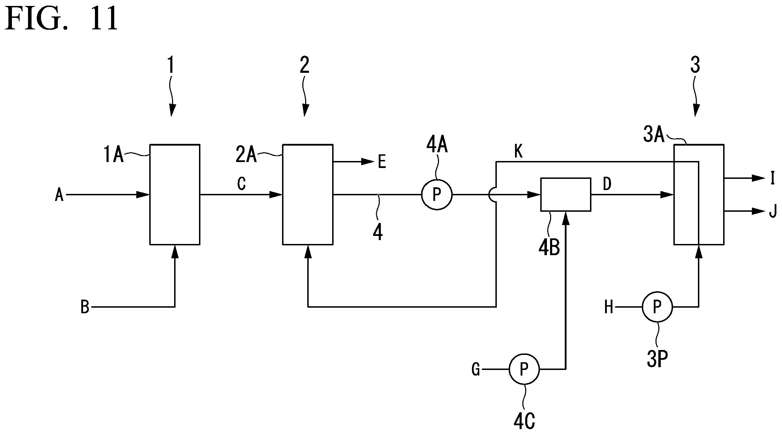

Further, in the first embodiment, the dewatering hot water H supplied to the dewatering means 3 is discharged as the wastewater J, but as in a second embodiment of the present invention shown in the schematic diagram in Fig. 11, the dewatering hot water discharged from the dewatering means 3 may be circulated and supplied to the thickening means 2 as circulating thickening hot water K so as to be reused. Also in Fig. 11, the same reference numerals are given to the portions common to those in Fig. 1.

In the case of the second embodiment, the dewatering hot water as the circulating thickening hot water K discharged from the dewatering means 3 also includes the separation solution discharged from the dewatering means 3. Therefore, according to the second embodiment, the insoluble solid content (SS) in the separation solution can be captured by the thickening means 2 to improve the SS recovery rate. Further, since the residual polymer in the separation solution can be effectively used, the performance of the dewatering means 3 can be improved, and the temperature of the thickened sludge D can be further increased to further improve the dewatering efficiency.

### [Industrial Applicability]

By applying the above-mentioned organic sludge treatment facility and the treatment method to the relevant field, it is possible to provide an organic sludge treatment facility and a treatment method capable of achieving a sufficiently low moisture content of the organic sludge by heating the organic sludge in the thickening means.

### [Reference Signs List]

1: Coagulation means
2: Thickening means
2A: Thickening tank
2a, 11a: Thickening filtration screen
2b, 11b: Liquid filtration chamber
2B, 12: Transporting means
2c, 12a: Rotation shaft
2d, 12b: Screw
3: Dewatering means
4: Thickened sludge supply path
11: Casing
21: Roll
22: Thickening filtration cloth
A: Organic sludge
B: Polymer coagulant
C: Coagulated sludge
D: Thickened sludge
E, J: Wastewater
F: Thickening hot water
G: Coagulant
H: Dewatering hot water
I: Dewatered sludge
K: Circulating thickening hot water

## Claims

1. An organic sludge treatment facility comprising:
thickening means for thickening organic sludge that is coagulated by adding a coagulant,
wherein thickening hot water having a temperature in a range of higher than 50°C and lower than 100°C is supplied from thickening hot water supply means and mixed with the organic sludge in the thickening means.

2. The organic sludge treatment facility according to Claim 1,
wherein the temperature of the thickening hot water is in a range of 60°C or higher and 90°C or lower.

3. The organic sludge treatment facility according to Claim 1 or 2,
wherein the organic sludge is thickened to a sludge concentration of 5 wt% or higher by the thickening means.

4. The organic sludge treatment facility according to any one of Claims 1 to 3,
wherein the thickening means is a vertical type filtration thickening device including
a thickening tank having a central axis which extends in a vertical direction and a body which is a thickening filtration screen, the organic sludge being supplied into the thickening filtration screen, and an outer circumference of the thickening filtration screen being a liquid filtration chamber; and
transporting means in which a screw is attached to a rotation shaft extending along the central axis of the thickening tank, and the rotation shaft and the screw are rotated by rotation drive means to transport the organic sludge, and
wherein the rotation shaft of the transporting means has a hollow cylindrical shape, a plurality of through-holes are formed in a cylindrical wall portion of the rotation shaft, and the thickening hot water is supplied to a hollow portion in the rotation shaft and ejected from the through-holes such that the thickening hot water is supplied to the organic sludge to be mixed therewith.

5. The organic sludge treatment facility according to any one of Claims 1 to 3,
wherein the thickening means is a screw type thickening device including
a casing having a central axis which extends in a lateral direction and a body which is a thickening filtration screen, the organic sludge being supplied into the thickening filtration screen, and an outer circumference of the thickening filtration screen being a liquid filtration chamber; and
transporting means in which a screw is attached to a rotation shaft extending along the central axis of the casing, and the rotation shaft and the screw are rotated by rotation drive means to transport the organic sludge, and
wherein the thickening hot water is supplied from the thickening hot water supply means and mixed with the organic sludge.

6. The organic sludge treatment facility according to any one of Claims 1 to 3,
wherein the thickening means is a belt type thickening device that includes an endless thickening filtration cloth that is wound around a plurality of rolls to be traveled, and filters and thickens the organic sludge supplied to a sludge supply unit on a side opposite to a traveling direction of the thickening filtration cloth in a thickening filtration unit in which the thickening filtration cloth travels in a horizontal direction by the thickening filtration cloth, and
wherein the thickening hot water is supplied from the thickening hot water supply means to a traveling direction side of the thickening filtration cloth with respect to the sludge supply unit in the thickening filtration unit, and mixed with the organic sludge.

7. An organic sludge treatment method for thickening organic sludge, which is coagulated by adding a coagulant, by thickening means, comprising:
supplying thickening hot water having a temperature higher than 50°C and lower than 100°C from thickening hot water supply means to the thickening means to be mixed with the organic sludge.

8. The organic sludge treatment method according to Claim 7,
wherein the temperature of the thickening hot water is in a range of 60°C or higher and 90°C or lower.

9. The organic sludge treatment method according to Claim 7 or 8,
wherein the organic sludge is thickened to a sludge concentration of 5 wt% or higher by the thickening means.
